# EUROPEAN PATENT APPLICATION

(11) **EP 1 519 069 A1**
(43) Date of publication of application: **30.03.2005**
(21) Application number: 04725167.3
(22) Date of filing: 01.04.2004
(51) Int. Cl.: F16D 65/095, F16D 65/02, F16D 55/224

(54) **FLOATING CALIPER DISC BRAKE**

(30) Priority: 03.04.2003 JP 2003099949; 12.03.2004 JP 2004071419
(71) Applicant: Akebono Brake Industry Co., Ltd., Tokyo 103-0016 (JP)
(72) Inventor: KINOSHITA, K.; c/o Akebono Brake Industry Co., Ltd, Chuo-ku, Tokyo 103-8534 (JP); IKEDA, H.; c/o Akebono Brake Industry Co., Ltd, Chuo-ku, Tokyo 103-8534 (JP); WAKABAYASHI, I.; c/o Akebono Brake Industry Co.,, Chuo-ku, Tokyo 103-8534 (JP); KASHIMURA, T.; c/o Akebono Brake Industry Co., Ltd, Chuo-ku, Tokyo 103-8534 (JP); MASUKO, S.; c/o Akebono Brake Industry Co., Ltd, Chuo-ku, Tokyo 103-8534 (JP); MORIO, T.; c/o Akebono Brake Industry Co., Ltd, Chuo-ku, Tokyo 103-8534 (JP)
(74) Representative: Grünecker, Kinkeldey, Stockmair & Schwanhäusser Anwaltssozietät
(86) International application number: PCT/JP2004/004771
(87) International publication number: WO 2004/090367

(57) **Abstract**

An object of the present invention is to provide a floating caliper type disc brake which can effectively suppress the occurrence of uneven wear in linings of respective pads, and effectively suppress the occurrence of noise and judder during braking.

In the present invention, a caliper is supported by a support member displaceably in an axial direction of a rotor. Pressed-side shim plates are respectively lined on reverse surfaces of back plates of pads supported by the support, while supporting-side shim plates are lined on an inner side surface of a claw portion and on a distal end face of a piston. The pressed-side shim plates and the pressing-side shim plates are respectively retained by mating members to be lined on by means of resilient retainers, and one surface of each of the mutually opposing pressed-side shim plates and one surface of each of the pressing-side shim plates are slidably abutted against each other.

## Description

### Technical Field:

A floating caliper type disc brake in accordance with the present invention is used for braking an automobile. The present invention is aimed at preventing uneven wear of pads incorporated in such a disc brake and uneven wear of a rotor with respect to its radial direction.

### Background Art:

As disclosed in patent documents 1 to 3, as a disc brake for braking an automobile, a floating caliper type in which a caliper is supported displaceably by a support member by means of a pair of guide pins is conventionally widely known and is actually used extensively. Figs. 21 and 22 show a disc brake disclosed in the patent document 1 among such floating caliper type disc brakes. In this floating caliper type disc brake, during braking, a caliper 2 is displaced with respect to a rotor 1 which rotates with a wheel (not shown). In the state in which the disc brake is assembled to a vehicle, a support member 3 provided in a state of being disposed adjacent to one side of this rotor 1 is fixed to a vehicle body (not shown) by means of mounting holes 4. In addition, the caliper 2 is supported by this support member 3 displaceably in the axial direction of the rotor 1.

For this reason, a pair of guide pins 5 are respectively provided in both end portions of the caliper 2 as viewed in the rotating direction of the rotor 1, while a pair of guide holes 6 are similarly provided in both end portions of the support member 3 of the support. The pair of guide pins 5 and the pair of guide holes 6 are provided in parallel to a center axis of the rotor 1. The guide pins 5 are inserted in the guide holes 6 slidably in the axial direction. Adustproof boot 7 is provided between an outer peripheral surface of a proximal end portion of each guide pin 5 and an opening portion of each guide hole 6. It should be noted that there are cases where the inside diameters of the guide holes 6 are mutually different, and there are cases where the outside diameters of the guide pins 5 are also mutually different correspondingly.

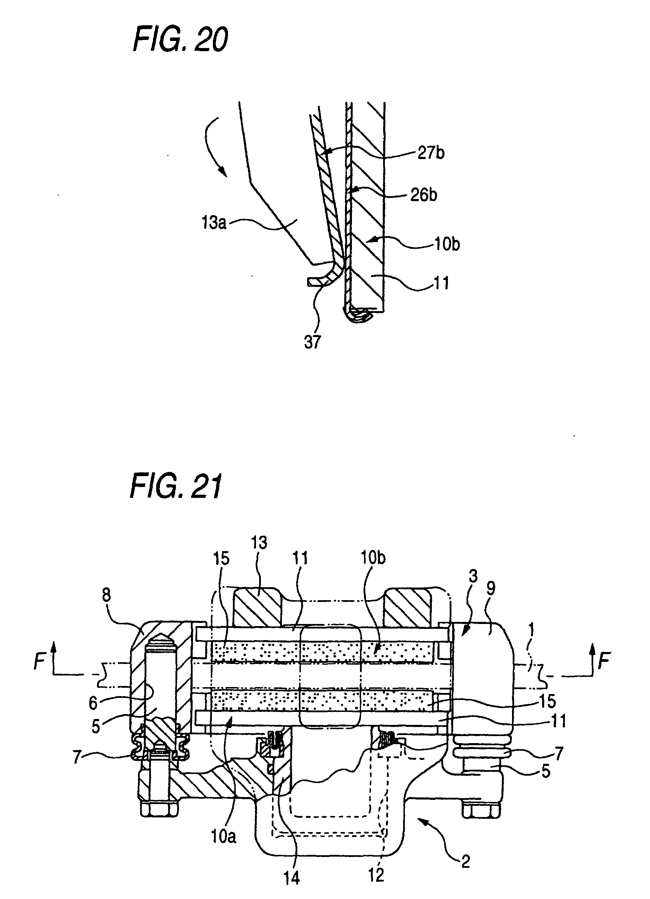

In addition, run-in side and run-out side engaging portions 8 and 9 are respectively provided in both end portion of the support member 3 at positions spaced apart in the circumferential direction of the rotor 1. Distal ends of these engaging portions 8 and 9 are bent in a U-shape in such a manner as to straddle an outer peripheral portion of the rotor 1 vertically in Fig. 21. Both end portions of a pair of back plates 11 making up pads 10a and 10b are engaged with both these engaging portions 8 and 9 slidably in the axial direction of the rotor 1. The caliper 2 is disposed which has a cylinder portion 12 and a claw portion 13 which are coupled by a bridge portion straddling the pads 10a and 10b. A piston 14 for pressing the inner pad 10a (the inner side in the transverse direction of the vehicle, i.e., the lower side in Fig. 21) against the rotor 1 is liquid-tightly fitted in the cylinder portion 12 of this caliper 2.

In effecting braking, pressure oil is fed into the cylinder portion 12 to cause a lining 15 of the inner pad 10a to be pressed against an inner side surface of the rotor 1 upwardly from below in Fig. 21 by the piston 14. Then, as a reaction of this pressing force, the caliper 2 is displaced downwardly in Fig. 21 on the basis of the sliding motion of the guide pins 5 relative to the guide holes 6. Consequently, the claw portion 13 presses the lining 15 of the outer pad 10b (the outer side in the transverse direction of the vehicle, i.e., the upper side in Fig. 21) against an outer side surface of the rotor 1. As a result, this rotor 1 is firmly clamped from both inner and outer sides thereof, thereby effecting braking.

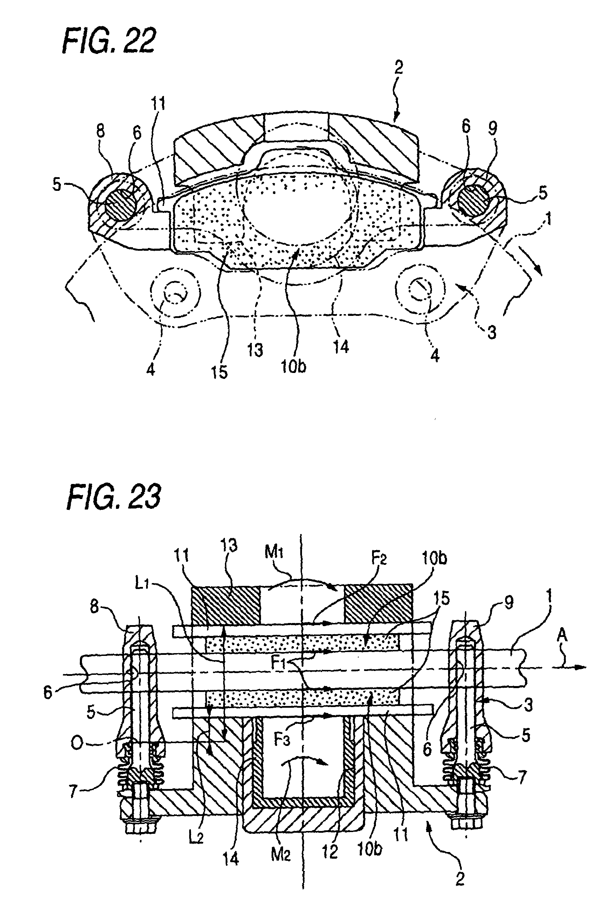

In addition, although not shown in Figs. 21 and 22, a structure in which a shim plate is clamped only on one side either between a reverse surface of the back plate 11 of the inner pad 10a and a distal end face of the piston 14 or between a reverse surface of the back plate 11 of the outer pad 10b and an inner side surface of the claw portion 13, is conventionally widely known through disclosures in patent documents 2, 5, and 7 to 10. In addition, a structure in which shim plates are respectively clamped between mating ones of the aforementioned surfaces is also conventionally known through disclosures in patent documents 3, 4, and 6. With the structures disclosed in these patent documents, by providing the shim plates between the mating ones of the surfaces (or between one pair of surfaces), there are possibilities of reducing brake noise and judder occurring during braking and of alleviating the degree to which the torque transmitted from the rotor 2 to the pads 10a and 10b is transmitted to the caliper 3.

It shouldbe noted that as prior art documents concerning the present invention, patent documents 11 and 12 are known in addition to the patent documents 1 to 10.
[Patent Document 1] JP-A-55-123029
[Patent Document 2] JP-A-11-044331
[Patent Document 3] JP-Y-2596090
[Patent Document 4] JP-A-59-019730
[Patent Document 5] JP-A-08-093808
[Patent Document 6] JP-A-10-308301
[Patent Document 7] JP-U-57-149331
[Patent Document 8] JP-U-02-124330
[Patent Document 9] JP-U-03-124031
[Patent Document 10] JP-U-05-042779
[Patent Document 11] JP-U-62-069635
[Patent Document 12] JP-A-55-014381

In the case of the floating caliper type disc brake which is conventionally known, as shown in Figs. 21 and 22, and is constructed and operates as described above, there are cases where so-called uneven wear occurs in which the amounts of wear of the linings 15 of the pads 10a and 10b become non-uniform. The occurrence of this uneven wear constitutes a cause of the occurrence of brake noise and judder during braking. A detailed description will be given of this aspect with reference to Fig. 23. It should be noted that although the structure of detailed portions differs between the structure shown in Figs. 21 and 22 and the structure shown in Fig. 23, the basic structures are the same.

In the state in which the rotor 1 has rotated in the direction indicated by arrow A in Fig. 23, if the linings 15 of the pads 10a and 10b are pressed against both side surfaces of this rotor 1 to effect braking, a drag force F₁ acts upon each of the linings 15 as the reaction of the braking force applied to this rotor 1. Further, forces F₂ and F₃ acting in the same direction as the drag force F₁ are respectively applied from the back plates 11 of the pads 10a and 10b to the inner side surface (the lower surface in Fig. 23) of the claw portion 13 of the caliper 2 and the distal end face (the upper end surface in Fig. 23) of the piston 14. In this case, there are cases where the caliper 2 tends to rotate clockwise in the drawing about an engaging portion o between the guide hole 6 and the guide pin 5 on the run-in side (the left-hand side in Fig. 23) of the rotor 1. Further, there are cases where moments M₁ and M₂ about the engaging portion o respectively act upon the claw portion 13 and the piston 14 on the basis of the forces F₂ and F₃. In addition, the length L₁ between the engaging portion o and the portion of contact between the inner side surface of this claw portion 13 and the back plate 11 of the outer pad 10b is greater than the length L₂ between this engaging portion o and the portion of contact between the distal end face of the piston 14 and the back plate 11 of the inner pad 10a (L₁ > L₂). For this reason, of the moments M₁ and M₂, the moment M₁ acting upon the claw portion 13 becomes greater than the moment M₂ acting upon the piston 14 (M₁ > M₂).

Meanwhile, in the case of the conventional structure shown in Figs. 21 and 22 referred to above, the inner side surface of the claw portion 13 and the distal end face of the piston 14 are in direct contact with the back plates 11 of the respective pads 10a and 10b. For this reason, the frictional force acting between each of these back plates 11 and each of the inner side surface of the claw portion 13 and the distal end face of the piston 14 become large. Accordingly, the moments M₁ and M₂ become large, and the caliper 2 is likely to tilt substantially with respect to the planar direction of the rotor 1 (is likely to undergo body tilting). In the case where the caliper 2 has tilted in this manner, the amounts of wear of the linings 15 of the pads 10a and 10b become non-uniform with respect to the rotating direction A of the rotor 1. Specifically, as for the outer pad 10b, the wear on the run-out side (the right-hand side in Fig. 23) of the rotor 1 progresses (the amount of wear becomes large) in comparison with the wear on the run-in side of the rotor 1. On the other hand, as for the inner pad 10a, the wear on the run-in side of the rotor 1 progresses in comparison with the wear on the run-out side of the rotor 1. As a result, uneven wear occurs in the linings 11 of the pads 10a and 10b.

In contrast, in the case of the structures disclosed in the patent documents 2, 5, and 7 to 10, the shim plate is clamped only on one side either between the reverse surface of the back plate 11 of the inner pad 10a and the distal end face of the piston 14 or between the reverse surface of the back plate 11 of the outer pad 10b and the inner side surface of the claw portion 13. For this reason, there is a possibility that the frictional force acting in one these two pairs of surfaces can be made small, so that the force F₂ (or outer peripheral surface) applied to the claw portion 13 or the piston 14 can be made small, and one of the moments M₁ and M₂ can be made small. However, in the case of the structures disclosed in the patent documents 2, 5, and 7 to 10, the shim plates are clamped not on both sides between the reverse surface of the back plate 11 of the inner pad 10a and the distal end face of the piston 14 and between the reverse surface of the back plate 11 of the outer pad 10b and the inner side surface of the claw portion 13. For this reason, of the moments M₁ and M₂, the other moment remains still large, and the effect whereby the tilting of the caliper 2 during braking can be suppressed is low.

In contrast, in the case of the structures disclosed in the patent documents 3, 4, and 6, the shim plates are respectively clamped on both sides between the reverse surface of the back plate 11 of the inner pad 10a and the distal end face of the piston 14 and between the reverse surface of the back plate 11 of the outer pad 10b and the inner side surface of the claw portion 13. However, in the case of the structures disclosed in the patent documents 3, 4, and 6, the following drawbacks are encountered, respectively. First, in the case of the structure disclosed in the patent document 3, the shim plates are respectively installed on one sides of the back plates 11 of both inner and outer pads 10a and 10b, and relative displacement of these shim plates is made possible in predetermined ranges with respect to the respective back plates 11 in the rotating direction and the radial direction of the rotor 1. However, the side surface of each of these shim plates on the side of the claw portion 13 or the piston 14 is directly opposed (without via the shim plate) to the inner side surface of this claw portion 13 or the distal end face of the piston 14. In addition, in the case of the structure disclosed in the patent document 4, a thin plate formed by securing a vibration isolating member between two shim plates is provided between each of the reverse surfaces of the back plates 11 of both inner and outer pads 10a and 10b and each of the inner side surface of the claw portion 13 and the distal end face of the piston 14. In the case of such a structure disclosed in the patent documents 3 and 4, the moments M₁ and M₂ acting upon the claw portion 13 and the piston 14 cannot be made sufficiently small, and the effect of making it possible to suppress the tilting of the caliper 2 during braking is small.

In the case of the structure disclosed in the patent document 6, an inner shim plate and an outer shim plate are provided between each of the reverse surfaces of the back plates 11 of both inner and outer pads 10a and 10b and each of the inner side surface of the claw portion 13 and the distal end face of the piston 14. Of these shim plates, the inner shim plates are fixed to the back plates 11 in a state in which the displacement of these shimplates in the rotational direction and the radial direction of the rotor 1 is prevented. In addition, each of the outer shim plates is retained by each of the back plates 11 in such a manner as to cover the adjacent inner shim plate, and the relative displacement of each of these outer shim plates with respect to each of the inner shim plates is made possible in a predetermined range in the rotational direction of the rotor 1. For this reason, if the frictional force acting between each inner shim plate and each outer shim plate is made small, there is a possibility of making it possible to suppress the tilting of the caliper 2 during braking. However, the range in which each outer shimplate is displaceable relative to each inner shim plate is limited, so that it is impossible to effectively obtain the effect of preventing the tilting of the caliper 2 during braking.

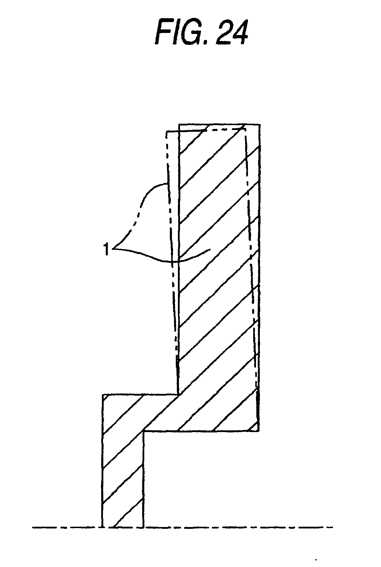

Meanwhile, in the case of the conventional structure shown in Figs. 21 and 22 referred to above, in addition to the problem that uneven wear occurs in the above-described pads 10a and 10b, there is a problem in that the amount of wear of the rotor 1 becomes non-uniform in the radial direction, i.e., so-called uneven wear can occur. The cause of the occurrence of such uneven wear in the radial direction of the rotor 1 is conceivably as follows: Namely, the rotor 1 during braking by the disc brake undergoes a temperature rise in consequence of the friction with the linings 15 of the respective pads 10a and 10b. During this temperature rise, the sliding portion of the rotor 1 provided in proximity to its outer periphery is deformed in the axial direction (specifically, outwardly) as shown by the chain lines in Fig. 24, during high-temperature braking and immediately after braking, owing to the effect of an axial offset between its mounting portion provided on the inside diameter side for the wheel and its sliding portion provided on the outside diameter side for the pads 10a and 10b. Further, it has been experimentally confirmed that a portion of the rotor 1 which is clamped by the pair of pads 10a and 10b during braking tilts with respect to a phantom plane which is present in an orthogonal direction to the rotational center.

When the sliding portion of the rotor 1 tilts in this way, the linings 15 of the pads 10a and 10b partially abut against both side surfaces of this rotor 1 during braking. Namely, in the case of the conventional general floating caliper type disc brake, the pair of guide pins 5 and the pair of guide holes 6, to which these guide pins 5 are fitted, are engaged with each other only axially displaceably. Accordingly, the inner side surface of the claw portion 13 and the distal end face of the piston which press the reverse surfaces of the back plates 11 of the pads 10a and 10b remain to be in the orthogonal direction to the rotational center of the rotor 1. For this reason, the linings 15 partially abut against both side surfaces of the rotor 1 in the above-described manner, so that the rotor 1 is unevenly worn during high-temperature braking or high-temperature idling. Specifically, in the case of the outer side of this rotor 1, for example, the wear on the radially outward side progresses (the amount of wear increases) as compared to the wear on the inward side. On the other hand, in the case the inner side of this rotor 1, for example, the wear on the radially inward side progresses as compared to the wear on the outward side. In whichever direction uneven wear progresses, not only does the state of sliding contact between each side surface of this rotor 1 and each lining 15 become inappropriate in the state in which the rotor 1 has not been deformed, and the durability of the rotor 1 and both pads 10a and 10b including the linings 15 unfavorably declines.

As disclosed in the patent document 2, there is an example in which a portion of the guide pin is loosely inserted in the guide hole. With this structure, however, a distal end portion of a main pin having a small clearance with respect to a small-diameter portion becomes deformed during braking, and causes a cylinder body to follow the circumferential displacement of the rotor. For this reason, it is apprehended that the sliding resistance based on the deformation of the distal end portion of the main pin becomes large.

The floating caliper type disc brake in accordance with the invention has been devised to overcome the above-described drawbacks.

### Disclosure of the Invention

In the same way as the above-described conventionally known floating caliper type disc brake, the floating caliper type disc brake in accordance with the invention includes a support, a pair of pads, a caliper, and a piston.

Of these members, the support member is fixed to a vehicle body in such a manner as to be disposed adjacent to a rotor which rotates together with a wheel.

In addition, the pair of pads are supported by the support member on both sides of the rotor slidably in an axial direction thereof.

In addition, the caliper is supported by the support member displaceably in the axial direction of the rotor, the caliper being supported by a plurality of guide holes provided in the support member and a plurality of guide pins respectively fitted in the guide holes.

In addition, of the claw portion and the piston, the claw portion is provided on one side of a bridge portion of the caliper, while the piston is provided on another side thereof, the bridge portion straddling the rotor.

In addition, the pair of pads are pressed against both side surfaces of the rotor in consequence of the extension of the piston so as to effect braking.

In the floating caliper type disc brake in accordance with the invention, particularly in the floating caliper type disc brake according to claim 1, pressed-side shim plates are respectively retained by those surfaces (reverse surfaces) of back plates of the pair of pads which are located away from a rotor side, pressing-side shim plates are respectively retained by pressing sides of the claw portion and the piston, and each of the pressed-side shim plates and each of the pressing-side shim plates are slidably abutted against each other.

In addition, in the floating caliper type disc brake according to claim 9, pressed-side shim plates are respectively fixed to or retained by those surfaces (reverse surfaces) of back plates of the pair of pads which are located away from a rotor side, pressing-side shim plates are respectively fixed to or retained by pressing sides of the claw portion and the piston (e.g., are respectively fixed to the pressing sides of the claw portion and the piston by bonding), and each of the pressed-side shim plates and each of the pressing-side shim plates are slidably abutted against each other.

### Brief description of the drawings:

Fig. 1 is a partially cutaway view, taken from an outside diameter side, of a floating caliper type disc brake in accordance with a first reference example of the reference examples of the invention.
Fig. 2 is half side views illustrating three examples of the shape of a guide pin.
Fig. 3 is a schematic view, taken along line A - A in Fig. 1, of a state in which a caliper is swung and displaced in conjunction with the deformation of a rotor.
Fig. 4 is a view illustrating a second reference example of the reference examples of the invention and similar to Fig. 1.
Fig. 5 is a diagram illustrating a first embodiment of the invention and corresponding to the A - A cross section in Fig. 1.
Fig. 6 is an exploded view of a part B in Fig. 5.
Fig. 7 is an exploded view of a part C in Fig. 5.
Fig. 8 is a cross-sectional view for explaining an effect which is obtained when guide pins and guide holes are engaged with each other only axially displaceably in the first embodiment.
Fig. 9 is an enlarged cross-sectional view corresponding to a part D in Fig. 8, for explaining another effect which is obtained in accordance with the first embodiment.
Fig. 10 is a graph in which results of an experiment conducted to confirm the effects obtained by the invention are shown by the relationship between the oil pressure (braking fluid oil) of pressure oil fed into a cylinder during braking and the tilting angle of a center axis of the caliper.
Fig. 11 is an exploded perspective view of a piston, an inner pad, and inner pressing- and pressed-side shim plates for constituting a second embodiment of the invention.
Fig. 12 is similarly an exploded perspective view of aclawportion, an outer pad, and outer pressing-and pressed-side shim plates.
Fig. 13 is a diagram illustrating a state of engagement between the claw portion and the outer pressing-side shim plate in accordance with the second embodiment.
Fig. 14 is a view illustrating a third embodiment of the invention and similar to Fig. 12.
Fig. 15 is a view illustrating a fourth embodiment of the invention and similar to Fig. 12.
Fig. 16 is a diagram similar to Fig. 13 and illustrating another shape of a retaining protrusion formed on the pressing-side shim plate.
Fig. 17 is a view illustrating a fifth embodiment of the invention and similar to Fig. 11.
Fig. 18 is a view illustrating a sixth embodiment of the invention and similar to Fig. 11.
Fig. 19 is a substantially cross-sectional view, partly omitted, of a seventh embodiment of the invention.
Fig. 20 is an enlarged cross-sectional view corresponding to a part E in Fig. 19 and illustrating a state in which the claw portion has been swung and displaced relative to the outer pressed-side shim plate and the outer pad.
Fig. 21 is a partial cutaway view illustrating a state in which a first example of a conventional structure is viewed from the same direction as that of Fig. 1.
Fig. 22 is a cross-sectional view taken along line F - F in Fig. 21.
Fig. 23 is a cross-sectional view for explaining moments acting upon the claw portion and the piston of the caliper during braking.
Fig. 24 is a partial cross-sectional view illustrating a state in which the rotor is deformed due to a temperature rise accompanying the braking.

In the drawings, the reference numbers, 1 is a rotor, 2 and 2a are calipers, 3 and 3a are supports, 4 is a mounting hole, 5, 5a, 5b, 5c, 5d, 5e and 5a' are guide pins, 6, 6a, 6a' are guide holes, 7, 7a and 7a' are boots, 8 and 8a are run-in side engaging portion, 9 and 9a are run-out side engaging portion, 10a and 10b are pads, 11 is a back plate, 12 is a cylinder portion, 13 and 13a are claw portions, 14 is a piston, 15 is a lining, 16 is an arm portion, 17 is a through hole, 18 is a bolt, 19 is a threaded hole, 20a, 20b, 20c, 20d and 20a' are large-diameter portions, 21 is an inclined surface portion, 22 is a cylindrical surface portion, 23a, 23b, 23a' and 23b' are rings, 24 is a retaining stepped portion, 25 is a sleeve, 26a and 26b are pressed-side shim plates, 27a and 27b are pressing-side shim plates, 28a, 28b, 28a' and 28b' are small-diameter portion, 29 is a extended small-diameter portion, 30 is a retainer, 31 is an outside diameter-side retainer, 32 is an inside diameter-side retainer, 33a and 33b are retaining grooves, 34 is a retainer, 35 is a recess, 36 is a pressing piece, 37 is a curved portion, 38 is a bent piece, 39 is an inside diameter-side curved portion, 40 is an outside diameter-side curved portion, 41 is a retaining protrusion, 42 is a retaining hole, 43 and 43a are retaining protrusion, 44 is a retaining protrusion, and 45 is a retaining protrusion.

### Best Mode for Carrying Out the Invention:

In implementing the invention, preferably as stated in claims 2 and 10, in the floating caliper type disc brake according to claim 1 or 9, each of the plurality of guide pins has, at its each opposite end portion in the axial direction of the rotor, a first diameter portion having a clearance of a predetermined dimension or more with respect to the guide hole in which the guide pin is fitted, and at least one of the guide pins has, in its intermediate portion in the axial direction of the rotor, a second diameter portion whose diameter is larger than that of the first diameter portion.

In the case of this preferred construction, the plurality of pins for supporting the caliper onto the support member have, at their axially opposite end portions, a clearance of a predetermined dimension or more with respect to the guide hole, and swing about engaging portions each provided between an outer peripheral portion of the second diameter portion formed in at least one of the guide pins and an inner peripheral surface of the guide hole in which that guide pin is inserted. For this reason, even in cases where the rotor has been deformed in the axial direction due to a temperature rise accompanying the braking, the inner side surface of the claw portion and the distal end face of the piston can be made parallel to both side surfaces of this rotor. As a result, the linings of the pair of pads are pressed against both side surfaces of the rotor substantially uniformly in areas ranging from the inner peripheral edge to the outer peripheral edge. Thus, it is possible to prevent the situation in which the rotor becomes partially worn due to its own displacement in the tilting direction, i.e., the amount of wear of the rotor is radially biased. Furthermore, according to this preferred construction, it is possible to make much smaller the moment acting upon this caliper as a whole on the basis of the forces applied to the caliper from the rotor during braking, and it is possible to more effectively suppress this caliper from tilting with respect to the planar direction of the rotor. As a result, it is possible to more effectively suppress the occurrence of uneven wear in the linings of the pads, and more effectively suppress the brake noise and judder occurring during braking.

### [First Reference Example]

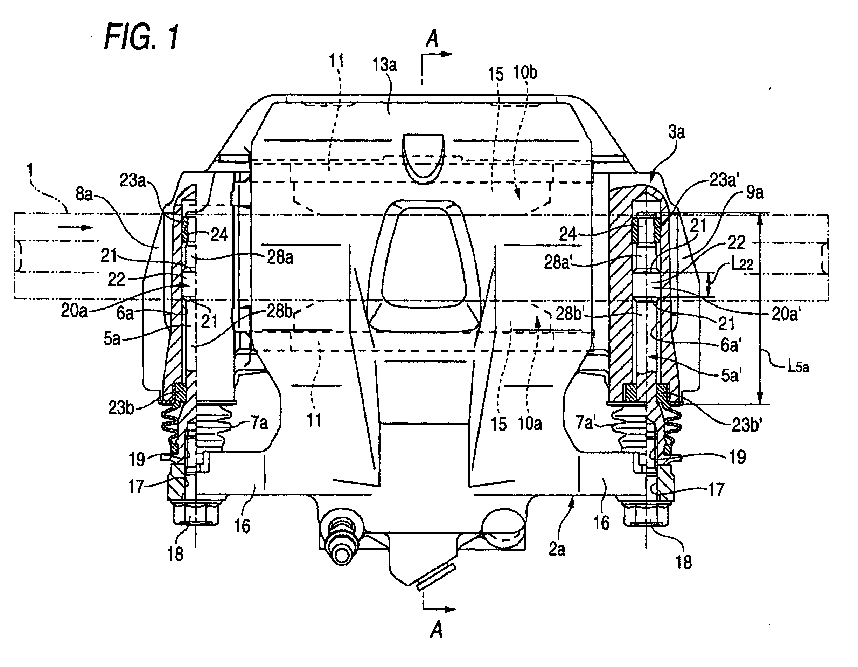

Figs. 1 to 3 show a first reference example of the invention. A floating caliper type disc brake of this reference example has a support member 3a, a pair of pads 10a and 10b, a caliper 2a, a claw portion 13a, and a piston 14 (see Figs. 21 and 22). Of these members, the support member 3a is fixed to a vehicle body in such a manner as to be disposed adjacent to a rotor 1 which rotates together with the wheel. In addition, the pads 10a and 10b are respectively disposed on both sides of the rotor 1 in a state which the pads 10a and 10b are supported by the support member 3a. It should be noted that the structures and action of a portion for supporting this support member 3a by the vehicle body, portions for supporting the pads 10a and 10b by the support member 3a, and portions for pressing the pads 10a and 10b against both side surfaces of the rotor 1 by means of the claw portion 13a and the piston 14 are similar to those of conventionally widely known disc brakes, including the structure shown in Figs. 21 and 22 referred to above. Therefore, a detailed illustration and description thereof will be omitted.

The caliper 2a is supported by the support member 3a displaceably in the axial direction of the rotor 1 (in the vertical direction in Fig. 1). For this reason, guide holes 6a and 6a' , which are open only on the inner side, are respectively formed in the axial direction of the rotor 1 inside a run-in side engaging portion 8a and an run-out side engaging portion 9a which are provided in both end portions, as viewed in the circumferential direction of the rotor 1, of the support member 3a. In addition, proximal end portions of guide pins 5a and 5a' are respectively supported and fixed by distal end portions of a pair of arm portions 16 formed at a portion (inner side end) of the caliper 2a in a state of projecting in the circumferential direction of this rotor 1. Namely, as a pair of bolts 18, which are respectively inserted from the inner side into a pair of through holes 17 formed in the distal end portions of the arm portions 16, are threadedly engaged with and tightened in a pair of threaded holes 19 which are open in proximal end faces of the guide pins 5a and 5a', the proximal end portions of the guide pins 5a and 5a' are supported and fixed by the distal end portions of the arm portions 16. It should be noted that although the inside diameters of the guide holes 6a and 6b and the outside diameters (the outside diameters of large-diameter portions 20a and 20a' , which will be described later, and portions which are present on axially opposite sides of the large-diameter portions 20a and 20a') of the guide pins 5a and 5a', which are respectively provided as pairs, are illustrated as being identical, these diameters need not necessarily be identical as in the case of the above-described conventional structure.

In the case of this example, as such guide pins 5a and 5a' are inserted into the guide holes 6a and 6a' from the inner side openings, the caliper 2a is supported by the support member 3a displaceably in the axial direction (the vertical direction in Fig. 1) of the rotor 1. The guide pins 5a and 5a' have solid bodies made of a metal, and the large-diameter portions 20a and 20a' whose outside diameters are greater than those of both end portions of these guide pins 5a and 5a' are respectively formed in axially intermediate portions of the guide pins 5a and 5a'. Outer peripheral surfaces of these large-diameter portions 20a and 20a' and inner peripheral surfaces of the guide holes 6a and 6a' are engaged with each other axially slidably.

Of the guide pins 5a and 5a', outside diameters d₂ of the large-diameter portions 20a and 20a' are made slightly (e.g., by 0.2 mm or less, preferably 0.15 mm or thereabouts) smaller than inside diameters D (in an ordinary sized vehicle or smaller, preferably 10 mm or thereabouts) of the guide holes 6a and 6a' (D > d₂ ≥ D - 0.2 mm, preferably d₂ = D - 0.15 mm) . Thus, these large-diameter portions 20a and 20a' are fitted into the guide holes 6a and 6a' with a small clearance in the radial direction and axially displaceably. In contrast, outside diameters d₁ of small-diameter portions 28a, 28b, 28a' , and 28b', which are remaining portions of the guide pins 5a and 5a' and are axially offset from the large-diameter portions 20a and 20a', are made sufficiently (e.g., by 0.5 mm or more, preferably 0.62 mm or thereabouts) smaller than the inside diameters D of the guide holes 6a and 6a' (d₁ ≤ D - 0.5 mm, preferably d₁ = D - 0.62 mm). Thus, the relevant portions are made slightly swingable and displaceable in the radial direction inside the guide holes 6a and 6a'. It should be noted that the outside diameters d₁ of the small-diameter portions 28a, 28b, 28a', and 28b'are made slightly different depending on the relative size of the brake and the deformability of the rotor 1.

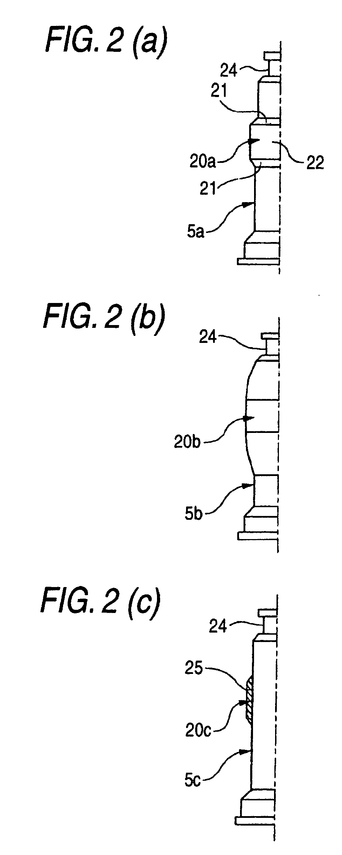

In addition, as the guide pins 5a and 5a' respectively having the large-diameter portions 20a and 20a' in the axially intermediate portions, Figs. 1 and 2A show one in which the shape of a generating line of this large-diameter portion 20 is trapezoidal. In such a large-diameter portion 20, an axial length L₂₂ of a cylindrical surface portion 22 excluding inclined surface portions 21 at both ends is set to be 10 to 20 mm or thereabouts, which is sufficiently (e.g., by 1/4 or less) shorter than a length L₅ₐ (e.g., 50 to 80 mm or thereabouts) of the portion of each of the guide pins 5a and 5a' inserted in each of the guide holes 6a and 6a' (L₂₂ << L₅ₐ). In addition, the guide pins 5a and 5a' become swingable and displaceable about the large-diameter portions 20a and 20a' in correspondence with very small gaps which are each present between the outer peripheral surface of the cylindrical surface portion 22 and the inner peripheral surface of each of the guide holes 6a and 6a'.

Further, elastic rings 23a and 23b, 23a' and 23b', made of rubber or the like are fitted over the guide pins 5a and 5a' at two axial positions, i.e., at a distal end portion and a proximal end portion, where each of the large-diameter portions 20a and 20a' is located therebetween. Of these rings 23a, 23b, 23a', and 23b', the rings 23a and 23a' respectively fitted over the distal end portions of the guide pins 5a and 5a' are formed into mere hollow cylindrical shapes, and are respectively fitted over and supported on small-diameter retaining stepped portions 24 formed at the distal end portions of these guide pins 5a and 5a' . On the other hand, the rings 23b and 23b' fitted over the proximal end portions of these guide pins 5a and 5a' are formed integrally with dust-proof boots 7a and 7a' respectively provided between outer peripheral surfaces of the proximal end portions of these guide pins 5a and 5a' and the openings in the guide holes 6a and 6a'. Each of the rings 23a and 23b, 23a' and 23b' , is provided in a radially elastically compressed state between the outer peripheral surface of each of the guide pins 5a and 5a' and the inner peripheral surface of each of the guide holes 6a and 6a'.

With the floating caliper type disc brake of this reference example constructed as described above, the caliper 2a is swingable with respect to the support member 3a about engaging portions between the outer peripheral surfaces of the large-diameter portions 20a and 20a' of the guide pins 5a and 5a' and the inner peripheral surfaces of the guide holes 6a and 6a'. For this reason, even in cases there the rotor 1 has been axially deformed due to a temperature rise accompanying the braking, as shown by the chain lines in Fig. 24 referred to above, the inner side surface of the claw portion 13a and the distal end face of the piston 14 can be made parallel to both side surfaces of the rotor 1. Namely, as a result of the fact that the inner side surface of the claw portion 13a and the distal end face of the piston 14 press the reverse surfaces of back plates 11 of the pads 10a and 10b, in a state in which linings 15 of the pads 10a and 10b are pressed against both side surfaces of the rotor 1, forces act upon the caliper 2a in directions in which the inner side surface of the claw portion 13a and the distal end face of the piston 14 are set parallel to both side surfaces of the rotor 1.

On the basis of these forces, the caliper 2a is swung with respect to the support member 3a in the above-described manner. At this juncture, the rings 23a and 23b, 23a' and 23b', are radially elastically compressed between the outer peripheral surfaces of the guide pins 5a and 5a' and the inner peripheral surfaces of the guide holes 6a and 6a'. For this reason, the inner side surface of the claw portion 13a and the distal end face of the piston 14 become parallel to both side surfaces of the rotor 1. The linings 15 of the pads 10a and 10b are respectively pressed against both side surfaces of this rotor 1 substantially uniformly in areas ranging from their inner peripheral edges to their outer peripheral edges. As a result, it is possible to prevent the rotor 1 from becoming partially worn with respect to the radial direction owing to the tilting of the rotor 1 itself.

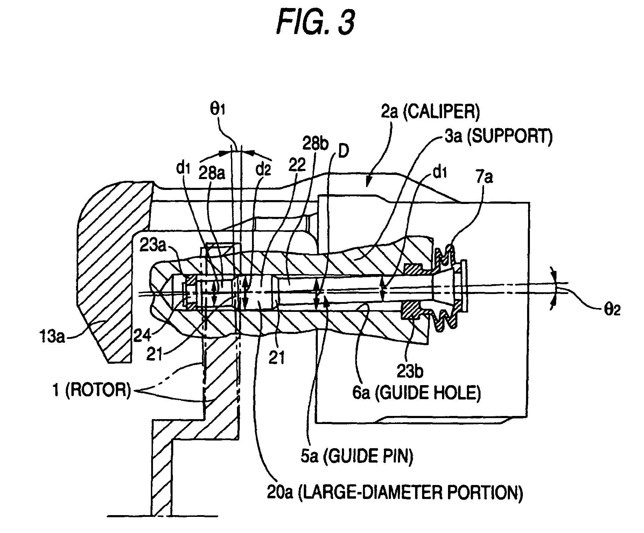

A description will be given of this aspect with reference to Fig. 3. A case is considered in which the rotor 1 has tilted by an angle θ₁ toward the outer side (the left-hand side in Fig. 3) in conjunction with a temperature increase occurring during braking. In this case as well, the guide hole 6a provided in the support member 3a supported by and fixed to the vehicle body side remains parallel to the rotational center of the rotor 1. On the other hand, the caliper 2a provided with the claw portion 13a and the piston 14 for pressing the pair of pads 10a and 10b against both side surfaces of this rotor 1 is swung in the direction of following the tilting direction of the rotor 1 (counterclockwise in Fig. 3) owing to forces accompanying these pressing forces. This swinging motion is possible by the portion of an angle θ₂ until the distal end portion or the proximal end portion of the guide pin 5a abuts against the inner peripheral surface of the inner side surface 6a, while compressing circumferential portions of the pair of rings 23a and 23b about the large-diameter portion 20a which is a portion of the guide pin 5a. This swingable angle θ₂ can be adjusted by changing the outside diameter of the remaining portion of the guide pin 5a which is axially offset from the large-diameter portion 20a. Accordingly, if the outside diameter of the portion axially offset from the large-diameter portion 20a is adjusted in correspondence with the tilt angle θ₁ of the rotor 1 determined experimentally, the linings 11 of the pads 10a and 10b can be pressed uniformly against both side surfaces of this rotor 1 by causing the inner side surface of the claw portion 13a and the distal end face of the piston to follow the inclination of the rotor 1.

Thus, in the case of the floating caliper type disc brake of this reference example, by devising the shapes of the guide pins 5a and 5a', the caliper 2a is supported by the support member 3a slightly swingably and displaceably. The guide pins 5a and 5a' have solid bodies which are entirely fabricated of a hard metal such as stainless steel, and have sufficient strength and rigidity. Accordingly, it is possible to sufficiently secure the supporting strength of the caliper 2a by the support member 3a by means of the guide pins 5a and 5a'. In addition, the large-diameter portions 20a and 20a' of the guide pins 5a and 5a' are fitted in the guide holes 6a and 6a' with respect to the radial direction. Further, the rings 23a and 23b, 23a' and 23b', are provided at positions sandwiching the large-diameter portions 20a and 20a' from both sides in the axial direction in a state of being elastically compressed in the radial direction. Accordingly, the caliper 2a becomes stable with respect to the support member 3a, and it is possible to reduce the rattling sound occurring during non-braking.

It should be noted that as the shape of the large-diameter portion of the guide pin for allowing the floating caliper type disc brake to be provided with the above-described function, it is also possible to adopt those shown in Figs. 2(b) and 2(c), in addition to the one described above. Of these guide pins, a guide pin 5b shown in Fig. 2(b) is formed such that a hollow cylindrical surface-shaped large-diameter portion 20b formed in an axially intermediate portion is sandwiched from its both axial sides by a pair of curved surfaces whose respective generating lines are convex circular arcs having large radii of curvature, the portion which is inserted into the guide hole being thus formed in the shape of a beer barrel. Meanwhile, a guide pin 5c shown in Fig. 2(c) is formed such that a hollow cylindrical sleeve 25 formed of a metal or a hard synthetic resin is fitted over and fixed to an axially intermediate portion, and an outer peripheral surface of this sleeve 25 is formed as a large-diameter portion 20c. Furthermore, although not shown, the portion where the shape of the generating line is rectilinear may be omitted from the shape shown in Fig. 2 (b) , and the entire large-diameter portion may be formed into a curved surface where the shape of the generating line is a convex circular arc.

### [Second Reference Example]

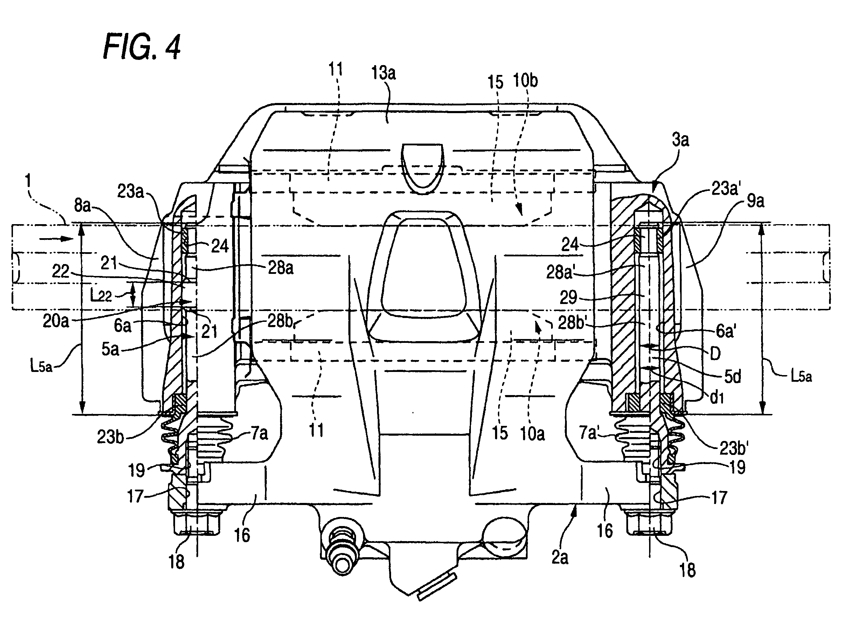

Next, Fig. 4 shows a second reference example of the invention. In the case of this reference example, the large-diameter portion 20a is formed only on one (run-in side) guide pin 5a. In this case, the outside diameter d₁ of a guide pin 5d is made sufficiently smaller than the inside diameter D (in an ordinary sized vehicle or smaller, preferably 10 mm or thereabouts) of the guide hole 6a' into which that guide pin 5d is inserted over the entire length (d₁ ≤ D - 0.5 mm, preferably d₁ = D - 0. 62 mm). Further, the rings 23a' and 23b' are respectively provided between, on the one hand, two positions on the inner peripheral surface of the guide hole 6a' and, on the other hand, two positions on the outer peripheral surface of the mating guide pin 5d. This arrangement makes it possible to prevent the mating guide pin 5d from rattling inside the guide hole 6a' during non-braking. In the case of this example, the portion which is an axially intermediate portion in the outer peripheral surface of the guide pin 5d and is located between the pair of small-diameter portions 28a' and 28b' is an extended small-diameter portion 29 serving as a fourth diameter portion stated in claim 4. It should be noted that the structure of the combination of the guide pins and the guide holes may be changed between the run-in side and the run-out side.

### <EMBODIMENTS>

### [First Embodiment]

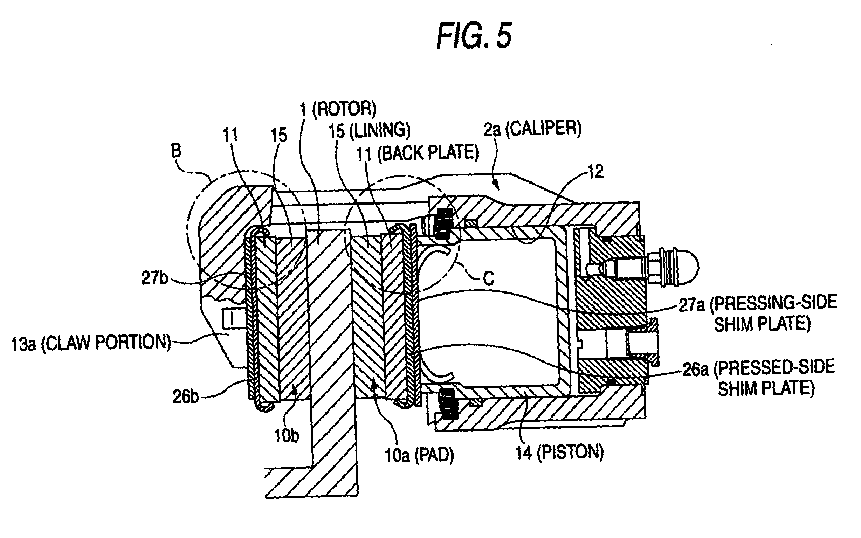

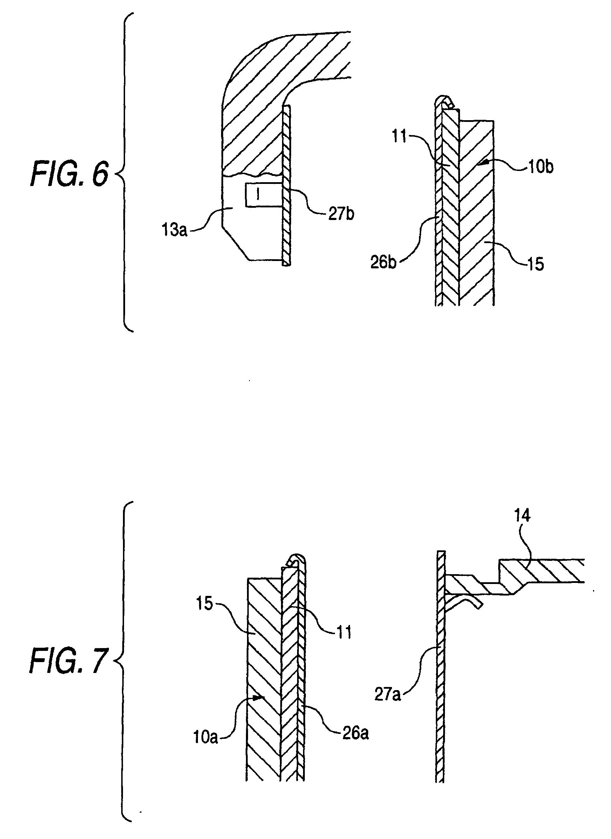

Next, a description will be given of a first embodiment of the invention shown in Figs. 5 to 7. In the case of this embodiment, in addition to the structure of the above-described first reference example, a pair of shim plates are provided between each of the pair of pads 10a and 10b and each of the claw portion 13a and the piston 14. The arrangement provided is such that the braking torque applied to the pads 10a and 10b due to the friction between each of the linings 15 of the pair of pads 10a and 10b and each of both side surfaces of the rotor 1 during braking is made difficult to be transmitted to the caliper 2a. Namely, the mutual slidability between the shim plates is made excellent during braking so that a large braking torque will not be applied to the caliper 2a.

Namely, in the case of this embodiment, since slight swinging and displacement of the caliper 2a is allowed, if a large braking torque is transmitted to this caliper 2a, the behavior of this caliper 2a would likely become unstable. In addition, since the area of abutment between the outer peripheral surface of each of the guide pins 5a, 5a', 5b, and 5c and each of the guide holes 6a and 6a' (see Figs. 1 to 3) is narrow, if a large braking torque is transmitted to the caliper 2a during braking, the wear of the abutment portion would likely progress. Accordingly, in the case of this embodiment, the braking torque applied to the pads 10a and 10b during braking is made difficult to be transmitted to the caliper 2a by the following construction.

For this purpose, in the case of this embodiment, pressed-side shim plates 26a and 26b are respectively lined on the reverse surfaces of the back plates 11 making up the pads 10a and 10b. In addition, pressing-side shim plates 27a and 27b are respectively lined on the distal end face of the piston 14 incorporated on the inner side of the caliper 2a and on the inner side surface of the claw portion 13a provided on the outer side end portion of the caliper 2a. Further, one of the pressed-side shim plates 26a and 26b and one of the pressing-side shim plates 27a and 27b are slidably abutted against each other. These shim plates 26a, 26b, 27a, and 27b are fabricated of metal plates such as stainless steel plates or the like, and are each provided with a resilient retainer for retaining the member to be added. It should be noted that since the shapes of such shim plates 26a, 26b, 27a, and 27b and the structure of fitting to the mating member are similar to those of the conventionally known shim plates as disclosed in the patent documents 4 to 10, a detailed illustration and description thereof will be omitted.

In the case of this embodiment, planar portions of the pressed-side shim plate 26a lined on the back plate 11 of the inner pad 10a and the pressing-side shim plate 27a lined on the distal end face of the piston 14 are abutted against each other displaceably in the planar direction. Also, planar portions of the pressed-side shim plate 26b lined on the back plate 11 of the outer pad 10b and the pressing-side shim plate 27b lined on the inner side surface of the claw portion 13a are abutted against each other displaceably in the planar direction. It should be noted that, preferably, grease is applied between the planar portions which are abutted against each other in each of these combinations, or a film made of a material having a low coefficient of friction, such as polyamide resin, polytetrafluoroethylene, or the like, is formed on one or both of the abutment surfaces of the planar portions.

In the case of this embodiment, by providing the above-described shim plates 26a, 26b, 27a, and 27b, the braking torque applied to the pads 10a and 10b during braking can be made difficult to be transmitted to the caliper 2a. Namely, the braking torque applied to the pads 10a and 10b during braking is borne by the support member 3a (see Fig. 1) supporting the pads 10a and 10b. However, part of this braking torque is transmitted to the caliper 2a through the piston 14 and the claw portion 13a. When the braking torque transmitted to the caliper 2a becomes large in this way, the degree to which the behavior of the caliper 2a becomes unstable during braking becomes noticeable, and the abutment wear of the outer peripheral surface of each of the guide pins 5a, 5a', 5b, and 5c and each of the guide holes 6a and 6a' is likely to progress, as described before. In contrast, in the case of this embodiment, as the abutment surfaces of the planar portions of the shim plates 26a, 26b, 27a, and 27b slide, the braking torque is made difficult to be transmitted to the caliper 2a. For this reason, it is possible to suppress progress in the uneven wear of the linings 15 and the wear of the outer peripheral surfaces of the guide pins 5a, 5a', 5b, and 5c and the inner peripheral surfaces of the guide holes 6a and 6a'. Further, the caliper 2a and the pads 10a and 10b become easily movable, so that an effect is produced in that it is possible to suppress noise and judder occurring during braking.

Furthermore, in the case of this embodiment, the guide pins 5a, 5a', 5b, and 5c respectively have, at their opposite end portions in the axial direction of the rotor 1, the small-diameter portions 28a and 28b, 28a' and 28b', each having a clearance of a predetermined dimension or more with respect to each of the guide holes 6a and 6a' in which these guide pins 5a, 5a', 5b, and 5c are fitted. In addition, the guide pins 5a, 5a' , 5b, and 5c respectively have, in their intermediate portion in the axial direction of the rotor 1, the large-diameter portions 20a, 20b, 20c, and 20a' whose diameters are larger than the small-diameter portions 28a and 28b, 28a' and 28b'. For this reason, it is possible to make much smaller the moment acting upon this caliper 2a as a whole on the basis of the forces applied to the caliper 2a from the rotor 1 during braking, and it is possible to more effectively suppress this caliper 2a from tilting with respect to the planar direction of the rotor 1. As a result, it is possible to more effectively suppress the occurrence of uneven wear in the linings 15 of the pads 10a and 10b, and more effectively suppress the brake noise and judder occurring during braking.

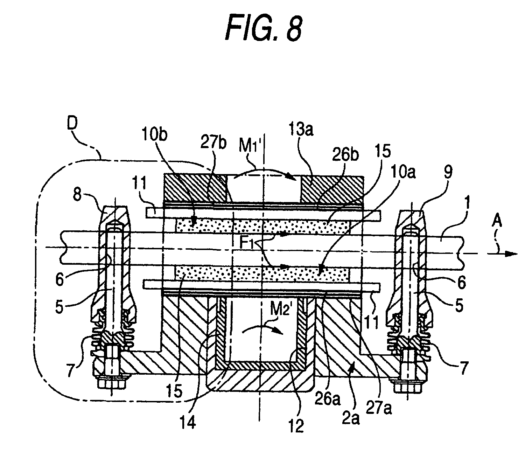

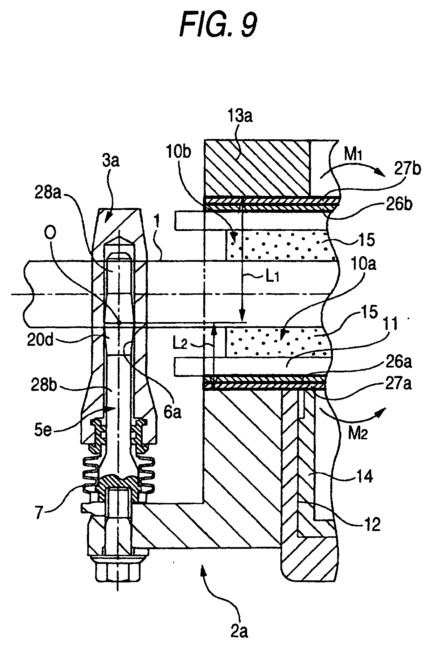

Referring next to Figs. 8 and 9, a detailed description will be given of the reason why the occurrence of uneven wear of the linings 15 can be suppressed in the above-described manner. First, Fig. 8 shows the structure in which the respective guide pins 5 and the respective guide holes 6 which are fitted in these guide pins 5 are engaged with each other axially displaceably, in the same way as the conventional structure shown in Figs. 21 and 22 referred to above. The pressed-side shim plates 26a and 26b and the pressing-side shim plates 27a and 27b, which are similar to those of this embodiment, are retained by the respective mating members to be lined on, by means of unillustrated retainers, between the inner side surface of the claw portion 13a of the caliper 2a and the reverse surface of the back plate 11 of the outer pad 10b and between the distal end face of the piston 14 and the reverse surface of the back plate 11 of the inner pad 10a. Such a structure shown in Fig. 8 also falls within the technical scope of the invention. In the case of such a structure shown in Fig. 8, it is readily possible to make sufficiently small the frictional force acting between each pair of the pressed- and pressing-side shim plates 26a, 26b, 27a, and 27b. For this reason, it is possible to make sufficiently small moments M₁' and M₂' based on forces acting upon the claw portion 13a and the piston 14 through the pads 10a and 10b from the rotor 1 during braking. Accordingly, the caliper 2a can be made difficult to tilt with respect to the planar direction of the rotor 1 during braking, so that it is possible to suppress the occurrence of uneven wear in the pads 10a and 10b. In particular, due to the fact that the length between the claw portion 13a and the center of the tilt in the case where the caliper 2a tends to tilt with respect to the planar direction of the rotor 1 is large, the moment M₁' acting upon this claw portion 13a becomes greater than the moment M₂' acting upon the piston 14. For this reason, the effect of making it possible to suppress the tilting of the caliper 2a by providing the pressed- and pressing-side shim plates 26b and 27b on the inner side surface of the claw portion 13a and the reverse surface of the back plate 11 of the outer pad 10b is more noticeable than the effect obtained by providing the pressed-side and pressing-side shim plates 26a and 27a on the distal end face of the piston 14 and the reverse surface of the back plate 11 of the inner pad 10a.

In addition, in the case of the structure shown in Fig. 8, the pressed-side shimplates 26a and 26b are respectively retained by retainers on the back plates 11 of the pads 10a and 10b, and the pressing-side shim plates 27a and 27b are respectively retained by retainers on the claw portion 13a and the piston 14. Therefore, the relative displacement in the planar direction of the mating members of the pressed-side and pressing-side shim plates 26a, 26b, 27a, and 27b is not restricted. For this reason, the mating members of these shim plates 26a, 26b, 27a, and 27b become easily movable, and the moments M₁' and M₂' acting upon the claw portion 13a and the piston 14 during braking can be effectively made small, making it possible to effectively obtain the effect of preventing the tilting of the caliper 2a. As a result, according to the structure shown in Fig. 8, it is possible to more effectively suppress the occurrence of uneven wear in the linings 15 of the pads 10a and 10b, and more effectively suppress the brake noise and judder occurring during braking. In contrast to such a structure shown in Fig. 8, in the case of the structure disclosed in the patent document 7, the shim plates are respectively attached to the distal end face of the piston and the reverse surface of the back plate of the inner pad, but the shim plates are not installed on the claw portion and the reverse surface of the back plate of the outer pad. In the case of such a structure disclosed in the patent document 7, the effect of suppressing the tilting of the caliper is substantially lower than the case of the invention for the above-described reasons.

Furthermore, in the case of this embodiment shown in Figs. 5 to 7, the following effect is obtained in addition to the effects obtained by the above-described structure shown in Fig. 8. Namely, in the case of this embodiment, as illustrated in detail in Fig. 9, each guide pin 5e has, at its opposite end portions in the axial direction of the rotor 1, the small-diameter portions 28a and 28b each having a clearance of a predetermined dimension or more with respect to the guide hole 6a in which the guide pin 5e is fitted. In addition, each guide pin 5e has, in its intermediate portion in the axial direction of the rotor 1, a large-diameter portion 20d whose diameter is larger than those of the small-diameter portions 28a and 28b. For this reason, the engaging portion o between the guide hole 6 and the guide pin 5 can be positioned between, on the one hand, a sliding interface between the inner side surface of the claw portion 13a and the outer pressing-side shim plate 27b and, on the other hand, a sliding interface between the distal end face of the piston 14 and the inner pressing-side shimplate 27a with respect to the axial direction of the rotor 1. During braking, this engaging portion o serves as a rotational center of the moment M₁ acting upon the claw portion 13a on the basis of the force applied from the rotor 1 to the claw portion 13a through the outer pad 10b and the pressed- and pressing-side shim plates 26b and 27b, and also serves as a rotational center of the moment M₂ acting upon the piston 14 on the basis of the force applied from the rotor 1 to the piston 14 through the inner pad 10a and the pressed-and pressing-side shim plates 26a and 27a. For this reason, the moments M₁ and M₂ act in mutually opposite directions and act in such a manner as to offset each other during braking, thereby making it possible to make smaller the moment acting upon the caliper 2a as a whole. Thus, it is possible to more effectively obtain the effect of preventing the tilting of the caliper 2a. As a result, it is possible to more effectively suppress the occurrence of uneven wear in the linings 15 of the pads 10a and 10b, and more effectively suppress the brake noise and judder occurring during braking.

It should be noted that Fig. 9 shows the moments M₁ and M₂ acting upon the caliper 2a as well as their rotational center o in the case where the overall shape of the generating line of the large-diameter portion 20d formed in the axial intermediate portion of the guide pin 5e is a convex circular arc. However, also in the case where the large-diameter portion of the guide pin 5e is arranged such that the shape of the generating line of the intermediate portion is made rectilinear, as shown in Figs. 2 (a) to 2 (c) referred to above, the engaging portion between the guide pin 5e and the guide hole 6e can be easily positioned between, on the one hand, the sliding interface between the inner side surface of the claw portion 13a and the outer pressing-side shim plate 27b and, on the other hand, the sliding interface between the distal end face of the piston 14 and the inner pressing-side shim plate 27a. According to the structure in which each guide pin 5e has, at its opposite end portions in the axial direction of the rotor 1, the small-diameter portions 28a and 28b each having a clearance of a predetermined dimension or more with respect to the guide hole 6a in which the guide pin 5e is fitted, and has, in its intermediate portion in the axial direction of the rotor 1, the large-diameter portion 20d whose diameter is larger than those of the small-diameter portions 28a and 28b, it is possible to make small the moment acting upon the caliper 2a as a whole during braking. In addition, it is possible to more effectively obtain the effect of preventing the tilting of the caliper.

Since the other arrangements and action concerning the first embodiment are similar to those of the first reference example shown in Figs. 1 to 3 referred to above, a redundant description thereof will be omitted.

Next, a description will be given of an experiment which was conducted to confirm the effects obtained by the structure shown in Figs. 5 to 8 referred to above. The experiment was conducted by using five types of floating caliper type disc brakes including implemented products 1 and 2 belonging to the invention and comparative products 1 to 3 deviating from the invention. The specifications of these five types are shown in Table 1 below. Namely, an implemented product 1 has a structure similar to that shown in Fig. 8, and has pressing- and pressed-side shim plates 26a and 26b, 27a and 27b, respectively, on both inner and outer sides with respect to the rotor 1. In addition, an implemented product 2 has a structure similar to that of the first embodiment shown in Figs. 5 to 7, and is provided with the large-diameter portions 20a and 20a' in the intermediate portions of the guide pins 5a and 5a', as well as the small-diameter portions 28a and 28b, 28a' and 28b' , on their both sides, respectively, in addition to the structure of the implemented product 1. In addition, the comparative product 1 has the conventional structure shown in Figs. 21 and 22 referred to above, and the shim plates are installed only on the reverse surfaces of the back plates 11 of the pads 10a and 10b, and the shim plates are not installed on the inner side surface of the claw portion 13a and the distal end face of the piston 14. In addition, the comparative product 2 has a structure similar to that disclosed in the patent document 7. Namely, the pressing- and pressed-side shim plates are installed only on the reverse surface of the back plate 11 of the inner pad 10a and the distal end face of the piston 14. In addition, in the comparative product 3, the pressing- and pressed-side shim plates are installed only on the reverse surface of the back plate 11 of the outer pad 10b and the inner side surface of the claw portion 13a.

**[Table 1]**

| | Shim Plate | Large-diameter Portion + Small-diameter Portions of Guide Pin |
|---|---|---|
| Implemented Product 1 | Pressing- and pressed-side shim plates are present on both inner and outer sides. | absent |
| Implemented Product 2 | ditto | present |
| Comparative Product 1 | Shim plates are present on the pad side on both the inner and outer sides | absent |
| Comparative Product 2 | Pressing- and pressed-side shim plates are present only on the inner side. | ditto |
| Comparative Product 3 | Pressing- and pressed-side shim plates are present only on the outer side. | ditto |

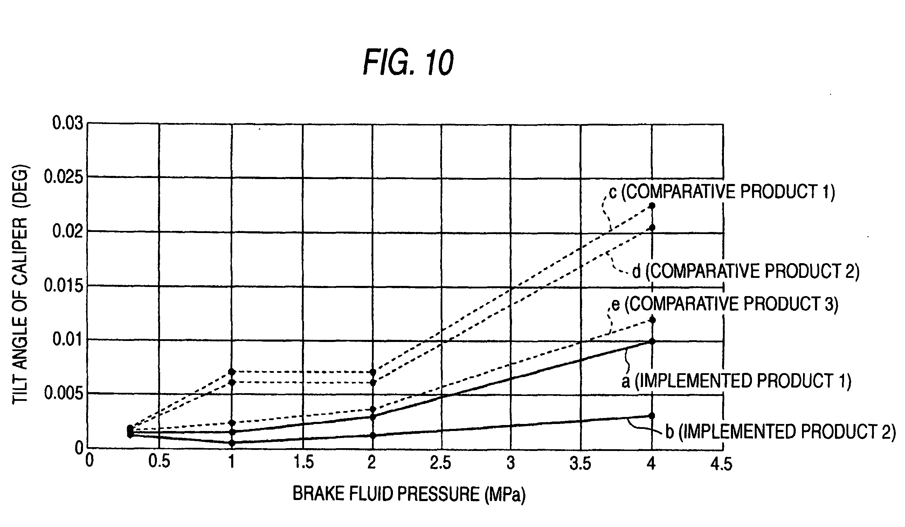

In addition, by using these implemented products 1 and 2 and comparative products 1 to 3, the tilting angle of the center axis of the caliper 2a during braking was measured in a state in which the oil pressure (braking fluid oil) of pressure oil fed into a cylinder portion 12 was made different variously. Fig. 10 shows the results of the experiment thus conducted. It should be noted that, in Fig. 10, solid lines a and b respectively show the implemented products 1 and 2, anddotted lines c to e respectively show the comparative products 1 to 3.

As is apparent from the results of the experiment shown in Fig. 10, in the case of the implemented product 1 in which the pressed-side shim plates 26a and 26b and the pressing-side shim plates 27a and 27b are respectively provided on both inner and outer sides with respect to the rotor 1, it was possible to make the tilt angle of the caliper 2a during braking sufficiently small to about 50% of the cases of the comparative products 1 and 2. In addition, in the case of the implemented product 2 in which the guide pins 5a, 5b, 5c, and 5a' respectively have the large-diameter portions 20a, 20b, 20c, and 20a' in their intermediate portions, as well as the small-diameter portions 28a, 28a', 28b, and 28b', and a clearance of a predetermined dimension or more is provided between each of these small-diameter portions 28a, 28a', 28b, and 28b' and each of the guide holes 6a and 6a', it was possible to make the tilt angle of the caliper 2a during braking much smaller than in the case of the implemented product 1.

### [Second Embodiment]

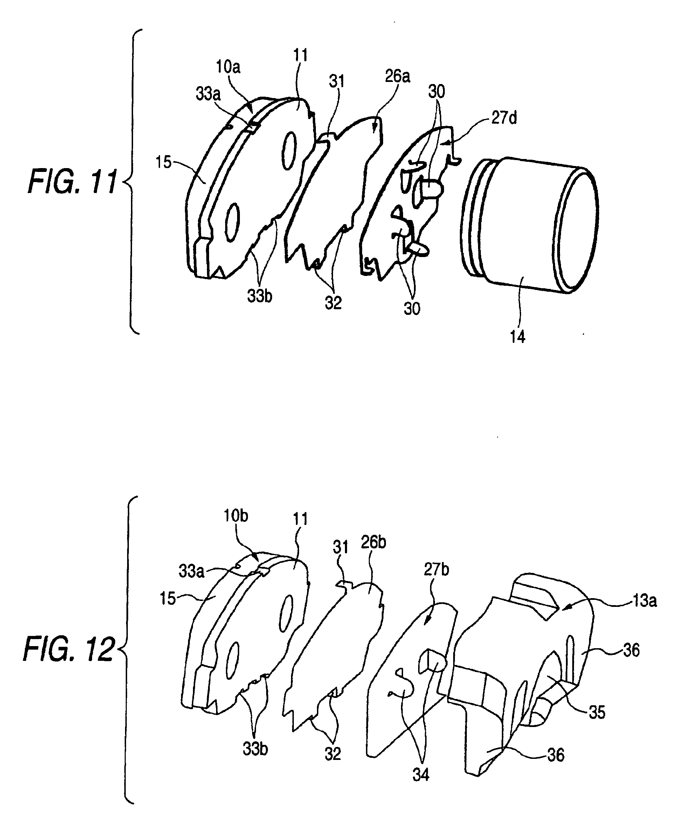

Next, Figs. 11 to 13 show a second embodiment of the invention. In the case of this embodiment, four retainers 30 are formed in a central portion of the inner pressing-side shim plate 27a in such a manner as to project toward the piston 14 side (the right-hand side in Fig. 11) by bending inner sides of U-shaped cutouts. These retainers 30 are retained at the inner side of the opening end portion of the piston 14. In addition, one outside diameter-side retainer 31 and a pair of inside diameter-side retainers 32 are respectively formed at an outside diameter-side peripheral edge of the inner pressed-side shim plate 26a and an inside diameter-side peripheral edge thereof in such a manner as to be bent toward the back plate 11 side (the left-hand side in Fig. 11) of the inner pad 10a. The outside diameter- and inside diameter-side retainers 31 and 32 are retained in retaining grooves 33a and 33b which are respectively formed in an outside diameter-side peripheral edge and an inside diameter-side peripheral edge of the back plate 11. By virtue of this arrangement, the displacement of the inner pressed-side shim plate 26a is restricted in the radial and circumferential directions of the rotor 1 (see Fig. 1, among others) with respect to the inner pad 10a.

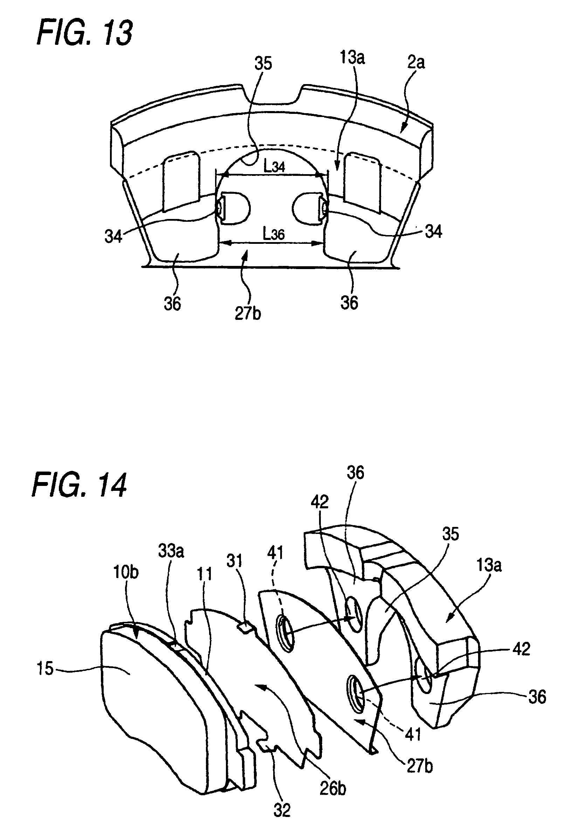

In addition, in the case of this embodiment, two retainers 34 are formed in a central portion of the outer pressing-side shim plate 27b in such a manner as to project toward the claw portion 13a side (the right-hand side in Fig. 12) by bending inner sides of U-shaped cutouts. These retainers 34 are retained at the inner side of a recess 35 provided in a central portion of this claw portion 13a. The interval between a pair of pressing pieces 36 making up this claw portion 13a for pressing the outer pad 10b toward the rotor 1 becomes smaller (narrower) as shown in Fig. 13. For this reason, by making an interval L₃₄ between the retainers 34 larger than an interval L₃₆ between distal ends of these pressing pieces 36 (L₃₄ > L₃₆), it is possible to prevent the pressing-side shim plate 27b from becoming displaced downwardly in Figs. 12 and 13 with respect to the claw portion 13a. Meanwhile, an outside diameter-side retainer 31 and inside diameter-side retainers 32, which are similar to those of the inner pressed-side shim plate 26a, are respectively formed at an outside diameter-side peripheral edge of the outer pressed-side shim plate 26b and an inside diameter-side peripheral edge thereof. The outside diameter- and inside diameter-side retainers 31 and 32 are retained in retaining grooves 33a and 33b which are respectively formed in an outside diameter-side peripheral edge and an inside diameter-side peripheral edge of the back plate 11 of the outer pad 10b. By virtue of this arrangement, the displacement of the outer pressed-side shim plate 26b in the radial and circumferential directions of the rotor 1 with respect to the outer pad 10b is restricted.

In addition, the pressed- and pressing-side shim plates 26a, 26b, 27a, and 27b are fabricated of metal plates such as stainless steel plates or the like. A rubber coating is provided on a side surface of the inner pressing-side shim plate 27a opposing the piston 14 and on a side surface of the outer pressing-side shim plate 27b opposing the claw portion 13a, respectively. Furthermore, a fluoro coating is provided both on that side surface of both side surfaces of the inner pressed-side shim plate 26a which is in sliding contact with the inner pressing-side shim plate 27a and on that side surface of both side surfaces of the outer pressed-side shim plate 26b which is in sliding contact with the outer pressing-side shim plate 27a.

In the case of this embodiment constructed as described above, as the side surfaces are provided with a rubber coating or a fluoro coating, the pressed- and pressing-side shim plates 27a, 27b, 26a, and 26b can be made relatively displaceable more easily during braking, and the generation of abnormal noise can be suppressed more effectively.

Since the other arrangements and action are similar to those of the first embodiment shown in Figs. 5 to 7 referred to above, identical portions will be denotedby the same reference numerals, and a redundant description thereof will be omitted.

It should be noted that the invention is not limited to the structure of this embodiment, and both inner and outer pressed- and pressing shim plates 26a, 27a, 26b, and 27b may be fabricated of mere metal plates such as stainless steel plates or the like without being provided with the rubber coating or the fluoro coating.

In addition, in the structure of the first embodiment shown in Figs. 5 to 7 referred to above or the second embodiment shown in Figs. 11 to 13, although not shown, a bent piece, which is bent toward the outer pad 10b side and is not retained by any member in an ordinary state, may be provided at the outer diameter-side peripheral edge of the outer pressing-side shim plate 27b. In the case where such a bent piece is provided, as this bent piece is retained by an upper edge of the outer pad 10b or the outer pressed-side shim plate 26b, it is possible to restrict the displacement of the outer pressing-side shim plate 27b in a direction toward the center of the rotor 1 (downwardly in Figs. 12 and 13). In addition, a bent piece, which is not shown but is bent in a direction away from the rotor 1 (see Fig. 5, among others) side, may be provided at the inner periphery-side peripheral edge of the inner pressed-side shim plate 26a. In this case, as the inner pressing-side shim plate 27a is retained by this bent piece, it is possible to restrict the displacement of the inner pressing-side shim plate 27a in a direction toward the center of the rotor 1 (downwardly in Figs. 11).

In addition, in the structure of the first embodiment shown in Figs. 5 to 7 referred to above or the second embodiment shown in Figs. 11 to 13, although not shown, a shim plate with a rubber coating provided on both sides may be clamped in at least one interval between each of the pads 10a and 10b and each of the pressed-side shim plates 26a and 26b and between each of the distal end face of the piston 14 and the inner side surface of the claw portion 13a and each of the pressing-side shim plates 27a and 27b, so as to suppress the generation of abnormal noise during braking more effectively. In addition, a shim plate with a heat-insulating resin coating provided on both sides may be clamped in at least one interval between each of the pads 10a and 10b and each of the pressed-side shim plates 26a and 226b and between each of the distal end face of the piston 14 and the inner side surface of the claw portion 13a and each of the pressing-side shim plates 27a and 27b, so as to suppress the heat generated between the rotor 1 and the pads 10a and 10b during braking from being transmitted to the caliper 2a.

### [Third Embodiment]

Next, Fig. 14 shows a third embodiment of the invention. In the case of this embodiment, in the structure of the second embodiment shown in Figs. 11 to 13 referred to above, a pair of retaining protrusions 41 each having a circular cross section are provided in both end portions in the widthwise direction (the left-and-right direction in Fig. 14) of the outer pressing-side shim plate 27b, and are formed (built up) in such a manner as to project toward the claw portion 13a side. In addition, a pair of retaining holes 42 each having a circular cross section are provided in inner surfaces (obverse surfaces in Fig. 14) of the pair of pressing pieces 36 making up this claw portion 13a. Ends of these retaining holes 42 which are located away from the rotor side may or may not be penetrated through outer surfaces (rear surfaces) of the pressing pieces 36. The retaining protrusions 41 are retained by the retaining holes 42 by being press fit into the retaining holes 42. By virtue of this arrangement, the pressing-side shim plate 27b is restricted from moving dislocatedly with respect to the claw portion 13a in the planar direction of this pressing-side shim plate 27b.

Since the other arrangements and action are similar to those of the second embodiment shown in Figs. 11 to 13 referred to above, identical portions will be denotedby the same reference numerals, and a redundant description thereof will be omitted.

### [Fourth Embodiment]

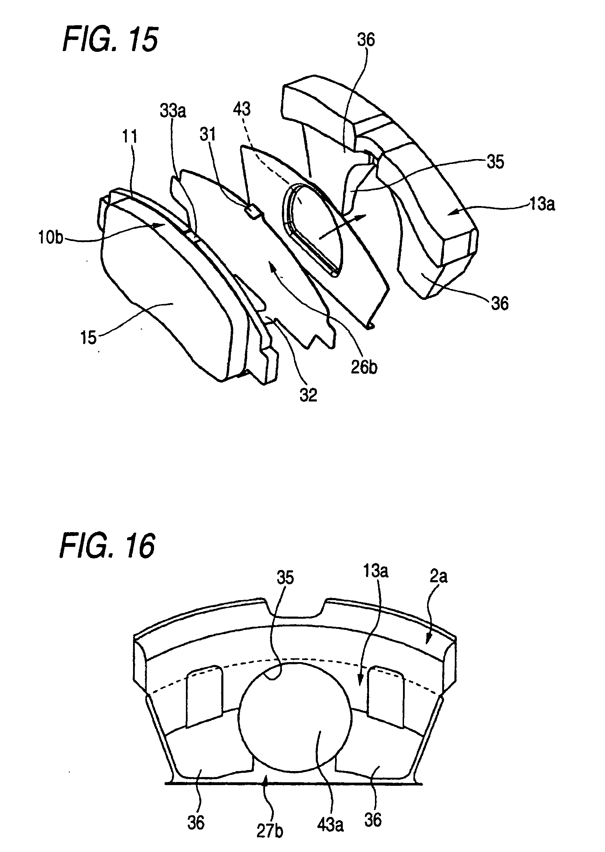

Next, Fig. 15 shows a fourth embodiment of the invention. In the case of this embodiment, in the structure of the second embodiment shown in Figs. 11 to 13 referred to above, a retaining protrusion 43 having a hanging bell-shaped cross section is provided in a central portion of the outer pressing-side shim plate 27b, and is formed (built up) in such a manner as to project toward the claw portion 13a side. This retaining protrusion 43 is press fit into an inner side of a recess 35 formed in a central portion of the claw portion 13a and is thereby retained by this claw portion 13a. By virtue of this arrangement as well, the pressing-side shim plate 27b is restricted from moving dislocatedly with respect to the claw portion 13a in the planar direction of this pressing-side shim plate 27b.

Since the other arrangements and action are similar to those of the second embodiment shown in Figs. 11 to 13 referred to above, identical portions will be denoted by the same reference numerals, and a redundant description thereof will be omitted.

It should be noted that the retaining protrusion 43 for being retained by the inner side of the recess 35 of the claw portion 13a is not limited to the shape shown in Fig. 15, and a retaining protrusion 43a may, for example, have a substantially circular cross-sectional shape, as shown in Fig. 16.

### [Fifth Embodiment]

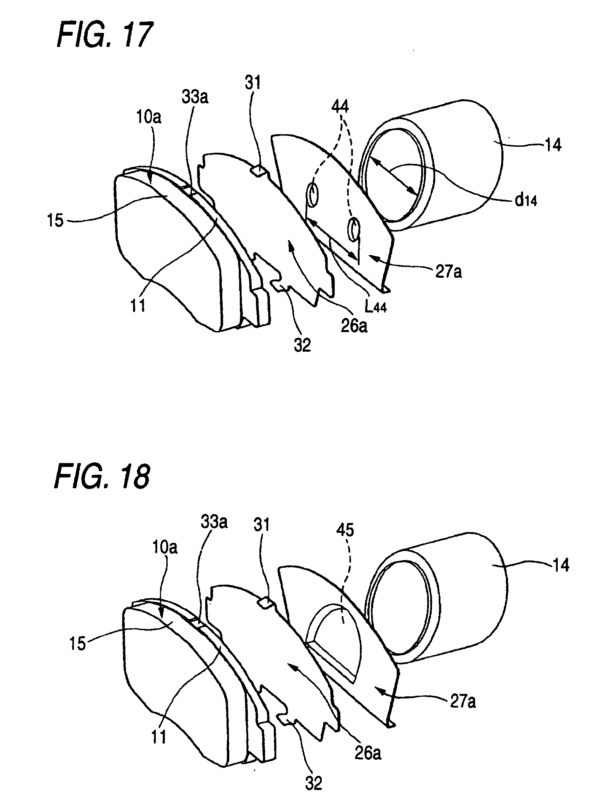

Next, Fig. 17 shows a fifth embodiment of the invention. In the case of this embodiment, in the structure of the second embodiment shown in Figs. 11 to 13 referred to above, a pair of retaining protrusions 44 each having a circular cross section are provided in both end portions in the widthwise direction (the left-and-right direction in Fig. 17) of the inner pressing-side shim plate 27a, and are formed (built up) in such a manner as to project toward the piston 14 side. These retaining protrusions 44 are retained by the piston 14 by being press fit into the inner side of the circular opening of the piston 14. For this reason, in the case of this embodiment, in a state before the retaining protrusions 44 are press fit into the inner side of this piston 14, a length L₄₄ between those portions of outer peripheral edges of the retaining protrusions 44 which are located on the widthwise outermost sides in the pressing-side shim plate 27a is set to be slightly greater than an inside diameter d₁₄ of the opening of the piston 14 (L₄₄ > d₁₄). By virtue of this arrangement, the pressing-side shim plate 27a is restricted from moving dislocatedly with respect to the piston 14 in the planar direction of this pressing-side shim plate 27a.

Since the other arrangements and action are similar to those of the second embodiment shown in Figs. 11 to 13 referred to above, identical portions will be denotedby the same reference numerals, and a redundant description thereof will be omitted.

### [Sixth Embodiment]

Next, Fig. 18 shows a sixth embodiment of the invention. In the case of this embodiment, in the structure of the second embodiment shown in Figs. 11 to 13 referred to above, a retaining protrusion 45 having a semicircular cross section is provided in a central portion of the inner pressing-side shim plate 27a, and is formed (built up) in such a manner as to project toward the piston 14 side. This retaining protrusion 45 is press fit into the inner side of the circular opening of the piston 14 and is thereby retained by this piston 14. By virtue of this arrangement as well, the pressing-side shim plate 27a is restricted from moving dislocatedly with respect to the piston 14 in the planar direction of this pressing-side shim plate 27a.

Since the other arrangements and action are similar to those of the second embodiment shown in Figs. 11 to 13 referred to above, identical portions will be denotedby the same reference numerals, and a redundant description thereof will be omitted.

### [Seventh Embodiment]

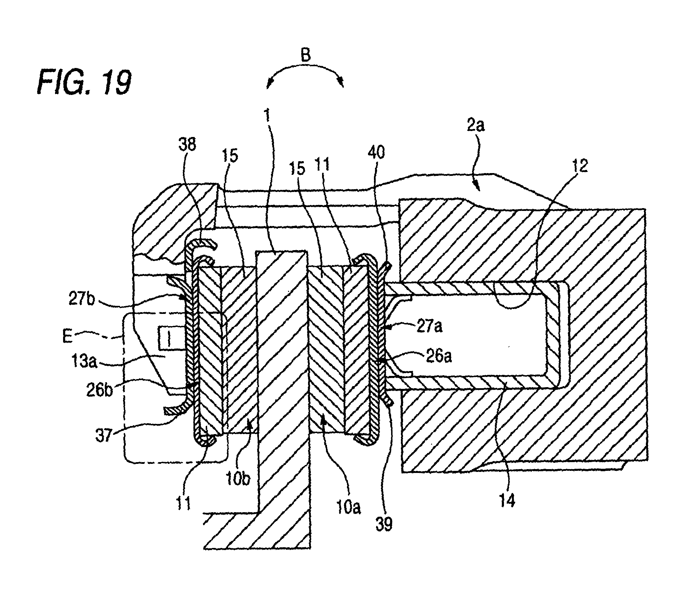

Next, Figs. 19 and 20 show a seventh embodiment of the invention. In the case of this embodiment, a curved portion 37 having a circular arc-shaped cross section is provided at an inside diameter-side end (a lower end in Figs. 19 and 20) of the outer pressing-side shim plate 27b in such a manner as to be curved toward the claw portion 13a side over the entire length in the widthwise direction (in a direction perpendicular to the plane of the drawings in Figs. 19 and 20). In addition, a cylindrical portion parallel to the center axis of the rotor 1 is provided at a distal half portion of this curved portion 37. In addition, a bent piece 38 is provided at an outside diameter-side end of the pressing-side shim plate 27b in such a manner as to be bent toward the outer pad 10b side over the entire length in the widthwise direction. Even in the event that the outer pressing-side shim plate 27b tends to come off the claw portion 13a toward the inside diameter side, this bent piece 38 functions to prevent it from occurring. Furthermore, inside diameter- and outside diameter-side curved portions 39 and 40 each having a circular cross section are respectively provided at both inside diameter- and outside diameter-side ends of the inner pressing-side shim plate 27a in such a manner as to be curved toward the piston 14 side over the entire length in the widthwise direction (in the direction perpendicular to the plane of the drawings in Fig. 19). The curved portion 37 provided on the outer pressing-side shimplate 27b and the inside diameter- and outside diameter-side curved portions 39 and 40 provided on the inner pressing-side shim plate 27a are respectively opposed to one surfaces of the outer and inner pressed-side shim plates 26b and 26a.

In the case of this embodiment constructed as described above, even in cases where the caliper 2a has been swung and displaced in the direction shown by arrow B in Fig. 19 independently of the rotor 1 and the pads 10a and 10b for some cause or other, the pressed- and pressing-side shim plates 26a, 26b, 27a, and 27b can be slid smoothly with each other, making it possible to stably obtain a desired braking force. For example, in a case where the caliper 2a has been swung and displaced counterclockwise in Figs. 19 and 20 relative to the outer and inner pads 10b and 10a, a pressing force can be imparted stably from the claw portion 13a to the pressed-side shim plate 26b lined on the outer pad 10b by means of the curved portion 37 provided on the outer pressing-side shim plate 27b during braking. Likewise, a pressing force can be imparted stably from the distal end face of the piston 14 to the pressed-side shim plate 26a lined on the inner pad 10a by means of the curved portion 40 provided on the inner pressing-side shim plate 27a.

In addition, in a case where the caliper 2a has been swung and displaced clockwise in Figs. 19 and 20 relative to the pads 10b and 10a, a pressing force can be imparted stably from the piston 14 to the pressed-side shim plate 26a lined on the inner pad 10a by means of the inside diameter-side curved portion 39 provided on the inner pressing-side shim plate 27a during braking. As a result, even in cases where the caliper 2a has been swung and displaced, a desired braking force can be obtained stably. In addition, since the curved portion 37 and the outside diameter- and inside diameter-side curved portions 40 and 39 are provided, it becomes possible to make it easy for the outer and inner pressing-side shimplates 27b and 27a to satisfactorily follow the swinging motion and displacement of the caliper 2a irrespective of this swinging motion and displacement.

Since the other arrangements and action are similar to those of the first embodiment shown in Figs. 5 to 7 referred to above, identical portions will be denoted by the same reference numerals, and a redundant description thereof will be omitted.

It should be noted that although in the above-described embodiments and reference examples an illustration has been given of the case where two guide pins are used, three or more guide pins maybe used in implementing the invention. In addition, the pressed-side shim plates 26a and 26b and the pressing-side shim plates 27a and 27b may be respectively fixed to the surfaces of the back plates 11 of the pads 10a and 10b which are located away from the rotor 1 side and to the pressing sides of the piston 14 and the claw portion 13a by bonding or the like.

As the above, the present invention is explained in detail and explained referring some specific embodiments, however, it will be apparent to those skilled in the art that various modifications and variations can be made to the preferred embodiments of the present invention without departing from the spirit or scope of the invention.

The present application is based on Japanese Patent Application (P.2003-099949) filed on April 3, 2003 and Japanese Patent Application (P.2004-071419) filed on March 12, 2004, the contents of which are incorporated herein by reference.

### Industrial Applicability:

In the case of the floating caliper type disk brake of the invention constructed as described above, the pressed-side shim plate and the pressing-side shim plate are present both between the claw portion and that surface of one of the pair of pads which is located away from the rotor side and between the piston and that surface of the other pad which is located away from the rotor side, and these shim plates are slidably abutted against each other. For this reason, the frictional force acting between one surfaces of both these shim plates can be easily made sufficiently small. For this reason, it is possible to make sufficiently small the moments based on the forces applied to the claw portion and the piston from the rotor through the pads during braking, and the caliper can be difficult to tilt with respect to the planar direction of the rotor during braking. As a result it is possible to suppress the occurrence of uneven wear in the pads. In addition, in the case of the invention, the pressed-side shim plates are respectively fixed to or retained by the back plates, and the pressing-side shim plates are respectively fixed to or retained by the pressing sides of the claw portion and the piston. For this reason, the relative displacement of these pressed- and pressing-side shim plates in the planar direction is not restricted. For this reason, both these shim plates are easily movable, and the moments acting upon the claw portion and the piston during braking can be effectively made small, thereby making it possible to effectively obtain the effect of preventing the tilting of the caliper. As a result, according to the invention, it is possible to more effectively suppress the occurrence of uneven wear in the pads, and effectively suppress the occurrence of brake noise and judder during braking.

## Claims

1. A floating caliper type disc brake comprising:
a support member fixed to a vehicle body and disposed adjacent to a rotor which rotates together with a wheel;
a pair of pads supported by the support member on both sides of the rotor slidably in an axial direction thereof;
a caliper supported displaceably in the axial direction of the rotor, the caliper being supported by a plurality of guide holes provided in the support member and a plurality of guide pins respectively fitted in the guide holes;
a claw portion provided on one side of a bridge portion of the caliper, the bridge portion straddling the rotor; and
a piston provided on another side thereof,
wherein the pair of pads are pressed against both side surfaces of the rotor in consequence of the extension of the piston so as to effect braking,
pressed-side shim plates are respectively retained by those surfaces of back plates of the pair of pads which are located away from a rotor side,
pressing-side shim plates are respectively retained by pressing sides of the claw portion and the piston, and
each of the pressed-side shim plates and each of the pressing-side shim plates are slidably abutted against each other.

2. The floating caliper type disc brake according to claim 1, wherein each of the plurality of guide pins comprises, at its each opposite end portion in the axial direction of the rotor, a first diameter portion having a clearance of a predetermined dimension or more with respect to the guide hole in which the guide pin is fitted, and
at least one of the guide pins comprises, in its intermediate portion in the axial direction of the rotor, a second diameter portion whose diameter is larger than that of the first diameter portion.

3. The floating caliper type disc brake according to claim 2, wherein, of the plurality of guide pins, the guide pin other than the guide pin having the second diameter portion comprises, in its intermediate portion in the axial direction of the rotor, a third diameter portion whose diameter is larger than that of the first diameter portion.

4. The floating caliper type disc brake according to claim 2 or 3, wherein, of the plurality of guide pins, the guide pin other than the guide pin having the second diameter portion comprises a fourth diameter portion connecting the first diameter portions and extending in the axial direction of the rotor with a clearance of a predetermined dimension or more with respect to an inner peripheral surface of the guide hole.

5. The floating caliper type disc brake according to any one of claims 2 to 4, wherein a shape of a generating line of the second diameter portion or the third diameter portion having the large diameter is one of a convex circular arc, a shape in which a rectilinear portion is sandwiched by a pair of convex circular arcs, and a trapezoid.

6. The floating caliper type disc brake according to any one of claims 2 to 5, wherein the second diameter portion or the third diameter portion having the large diameter is formed integrally with the guide pin.

7. The floating caliper type disc brake according to any one of claims 2 to 4, wherein the second diameter portion or the third diameter portion having the large diameter is formed as a sleeve is fitted over and fixed to the guide pin.

8. The floating caliper type disc brake according to any one of claims 2 to 4, wherein a ring of an elastic material is fitted over each of axially opposite sides of the guide pin sandwiching the second diameter portion or the third diameter portion having the large diameter.

9. A floating caliper type disc brake comprising:
a support member fixed to a vehicle body and disposed adjacent to a rotor which rotates together with a wheel;
a pair of pads supported by the support member on both sides of the rotor slidably in an axial direction thereof;
a caliper supported displaceably in the axial direction of the rotor, the caliper being supported by a plurality of guide holes provided in the support member and a plurality of guide pins respectively fitted in the guide holes;
a claw portion provided on one side of a bridge portion of the caliper, the bridge portion straddling the rotor; and
a piston provided on another side thereof,
wherein the pair of pads are pressed against both side surfaces of the rotor in consequence of the extension of the piston so as to effect braking,
pressed-side shim plates are respectively fixed to or retained by those surfaces of back plates of the pair of pads which are located away from a rotor side,
pressing-side shim plates are respectively fixed to or retained by pressing sides of the claw portion and the piston, and
each of the pressed-side shim plates and each of the pressing-side shim plates are slidably abutted against each other.

10. The floating caliper type disc brake according to claim 9, wherein each of the plurality of guide pins comprises, at its each opposite end portion in the axial direction of the rotor, a first diameter portion having a clearance of a predetermined dimension or more with respect to the guide hole in which the guide pin is fitted, and
at least one of the guide pins comprises, in its intermediate portion in the axial direction of the rotor, a second diameter portion whose diameter is larger than that of the first diameter portion.

11. The floating caliper type disc brake according to claim 10, wherein, of the plurality of guide pins, the guide pin other than the guide pin having the second diameter portion comprises, in its intermediate portion in the axial direction of the rotor, a third diameter portion whose diameter is larger than that of the first diameter portion.

12. The floating caliper type disc brake according to claim 10 or 11, wherein, of the plurality of guide pins, the guide pin other than the guide pin having the second diameter portion comprises a fourth diameter portion connecting the first diameter portions and extending in the axial direction of the rotor with a clearance of a predetermined dimension or more with respect to an inner peripheral surface of the guide hole.

13. The floating caliper type disc brake according to any one of claims 10 to 12, wherein a shape of a generating line of the second diameter portion or the third diameter portion having the large diameter is one of a convex circular arc, a shape in which a rectilinear portion is sandwiched by a pair of convex circular arcs, and a trapezoid.

14. The floating caliper type disc brake according to any one of claims 10 to 13, wherein the second diameter portion or the third diameter portion having the large diameter is formed integrally with the guide pin.

15. The floating caliper type disc brake according to any one of claims 10 to 13, wherein the second diameter portion or the third diameter portion having the large diameter is formed as a sleeve is fitted over and fixed to the guide pin.

16. The floating caliper type disc brake according to any one of claims 10 to 15, wherein a ring of an elastic material is fitted over each of axially opposite sides of the guide pin sandwiching the second diameter portion or the third diameter portion having the large diameter.

17. The floating caliper type disc brake according to any one of claims 1 to 16, wherein a curved portion having a circular arc-shaped cross section and curved toward a side of the claw portion or the piston is provided at an end of at least one of the pressing-side shim plates so as to retain or fix the pressing-side shim plate, the curved portion being opposed to one surface of the pressed-side shim plate.
